# EUROPEAN PATENT SPECIFICATION

(11) **EP 3 014 990 B1**
(45) Date of publication and mention of the grant of the patent: **11.05.2022**
(21) Application number: 14818635.6
(22) Date of filing: 20.06.2014
(51) Int. Cl.: A01K 75/00, D03D 15/00

(54) **FISHING NET PREVENTING ADHESION OF AQUATIC ORGANISMS**
WASSERORGANISMENANHAFTUNG VERHINDERNDES FISCHNETZ
FILET DE PÊCHE EMPÊCHANT L'ADHÉRENCE D'ORGANISMES AQUATIQUES

(30) Priority: 24.06.2013 JP 2013131934
(43) Date of publication of application: 04.05.2016
(73) Proprietor: Daikin Industries, Ltd., Osaka-shi, Osaka 530-8323 (JP)
(72) Inventor: YOSHIDA, Ken, Osaka-shi Osaka 530-8323 (JP); KAWAHARA, Kazuya, Osaka-shi Osaka 530-8323 (JP); TSUJI, Masayuki, Osaka-shi Osaka 530-8323 (JP)
(74) Representative: Hoffmann Eitle
(86) International application number: PCT/JP2014/066470
(87) International publication number: WO 2014/208473

(56) References cited:
- WO-A1-2004/025007
- WO-A1-2014/056980
- CN-A- 102 702 880
- JP-A- H0 837 997
- JP-A- S6 322 908
- JP-A- 2002 336 705
- JP-A- 2012 214 739
- JP-U- S5 841 161
- US-A1- 2011 277 692

## Description

The present invention relates to a fishing net preventing adhesion of aquatic organisms.

### BACKGROUND ART

Many aquatic organisms (marine organisms), such as Balanomorpha, Ascidiacea, Serpula, Mytilus galloprovincialis, Cristaria plicata, Bugulidae, Enteromorpha, and Ulva, adhere to and grow on the surfaces of a variety of underwater structures, such as seawater-intake facilities of power plants, buildings (including ships), and articles to be used on water or underwater typified by fishing tools (e.g., fishing nets), and they seem to cause problems such as functional degradation or malfunction of underwater structures. Such adhering aquatic organisms have generally been removed by mechanical methods, such as scraping away at regular intervals. Currently, in contrast, various anti-fouling paints are developed and adhesion of aquatic organisms is mainly prevented by applying such coatings to the surfaces of underwater structures.

Examples of such anti-fouling paints include those containing toxic anti-fouling agents, such as organotin compounds, cuprous oxide, zinc pyrithione, and copper pyrithione. These anti-fouling paints can actually prevent adhesion and growth of aquatic organisms; however, since they contain toxic anti-fouling agents, such paints are preferably not produced or applied in terms of environment, health and safety. In addition, the toxic anti-fouling agents flow out from the paint films in water, and thus may pollute the water area over the long term.

JP-A-2000-287602 discloses a method of preventing adhesion of aquatic organisms to an underwater structure comprising covering the whole water draft portion of an underwater structure with a specific polyolefin sheet.

JP-A-1988-22908 discloses a method of preventing adhesion of underwater organisms to the surface of an underwater structure comprising covering the surface of an underwater structure with a specific fabric, net, or porous sheet.

JP-T-1996-505337 discloses a composite marine structure comprising a marine substrate having adhered to at least a portion of its surface a layer of a water-permeable composite article comprising a non-woven fibrous web having entrapped therein active particulate to provide the marine structure with protection against at least one of fouling and corrosion.

JP-A-2002-336705 discloses a fiber structure, such as a fishing net, that prevents the adhesion of underwater organisms by adding and/or fixing a sea urchin-shaped composite photocatalyst to the fibers of the net.

JP-A-2012-214739 discloses a sheet composed of a fluororesin for preventing adhesion of aquatic organisms.

WO 2014/025007 discloses yarn and fabric constructions of fluoropolymer fibers, wherein the yarn comprises ethylene/TFE copolymer and has specified tenacity, tensile quality and melt flow rate.

### SUMMARY OF INVENTION

### - Technical Problem

The present invention is devised in consideration of the above situation, and aims to provide a fishing net which is excellent in an effect of preventing adhesion of aquatic organisms and in strength, which readily sinks in water, and which is suitable for use in various forms and environments.

### - Solution to Problem

The present inventors have found that a woven fabric formed from yarn of PTFE has a better effect of preventing adhesion of aquatic organisms than fabric formed from any commodity resin such as polyamide, polyester, or polyvinyl chloride. They have also found that the above fabric has better strength and is more suitable for use in various forms and environments than nonwoven fabric. They have additionally found that the above fabric more readily sinks in water because the fluororesin has a higher specific gravity than commodity resin such as polyamide, polyester, and polyvinyl chloride. Thereby, the inventors have completed the present invention.

Specifically, the present invention relates to a fishing net comprising a woven fabric for preventing adhesion of aquatic organisms comprising yarn obtained by processing a fluororesin into the form of yarn, wherein the fluororesin is polytetrafluoroethylene (PTFE).

### - Advantageous Effects of Invention

Since the fishing net of the present invention (the present fishing net) comprises yarn containing a fluororesin, it is excellent in an effect of preventing adhesion of aquatic organisms and in strength, readily sinks in water, and is suitable for use in various forms and environments.

### BRIEF DESCRIPTION OF THE DRAWINGS

Fig. 1 is a picture of the appearance of a fabric in Example 2.
Fig. 2 is a picture of the appearance of a nonwoven fabric in Comparative Example 3.

### DESCRIPTION OF EMBODIMENTS

The present invention will be described in detail below.

The present fishing net comprises a woven fabric for preventing adhesion of aquatic organisms of the present invention comprises yarn containing PTFE. Thus, it can exert an excellent effect of preventing adhesion of aquatic organisms.

Examples of the aquatic organisms include Balanomorpha, Mytilus galloprovincialis, Actiniaria, Ostreidae, Ascidiacea, Hydrozoa, Bryozoa, various aquatic microorganisms, various marine algae (e.g., Siphonocladales, Sargassaceae, Ulva, Enteromorpha), various Diatomea, Annelida (e.g., Dexiospira foraminosa, Filograna implexa), and Porifera (e.g., Tethya aurantium).

The fluororesin has a specific gravity which is higher than that of commodity resin, such as polyamides (e.g., nylon) (specific gravity: 1.13-1.15), polyester (specific gravity: 1.30-1.38), and vinyl chloride (specific gravity: 1.35-1.45). Thereby, the fabric of the present invention readily sinks in water.

The fluororesin is polytetrafluoroethylene (PTFE).

The PTFE may be a homo PTFE consisting only of a TFE unit or may be a modified PTFE consisting of a TFE unit and a modifying monomer unit derived from a modifying monomer copolymerizable with TFE. The PTFE may be a high molecular weight PTFE which is non-melt-processible and fibrillatable, or may be a low molecular weight PTFE which is melt-processible and non-fibrillatable.

The term "melt-processible" herein means that a polymer can be melt-processed using a conventional processing device such as an extruder or an injection-molding device. Thus, the melt-processible fluororesin usually has a melt flow rate of 0.01 to 100 g/10 min, which is measured by the following method.

The modifying monomer may be any monomer copolymerizable with TFE. Examples thereof include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; perfluoroalkyl ethylenes; ethylene; and fluorine-containing vinyl ethers having a nitryl group. One modifying monomer may be used or multiple modifying monomers may be used.

Any perfluorovinyl ethers may be used, and examples thereof include an unsaturated perfluoro compound of the formula CF₂=CF-ORf¹ (1) wherein Rf¹ is a perfluoroorganic group. The term "perfluoroorganic group" herein means an organic group in which all the hydrogen atoms bonded to carbon atoms are replaced by fluorine atoms. The perfluoroorganic group may have etheric oxygen.

Examples of the perfluorovinyl ethers include perfluoro(alkyl vinyl ethers) (PAVE) represented by the above formula (1) wherein Rf¹ is C₁₋₁₀-perfluoroalkyl group, and preferably C₁₋₅-perfluoroalkyl.

Examples of the perfluoroalkyl group in PAVE include perfluoromethyl, perfluoroethyl, perfluoropropyl, perfluorobutyl, perfluoropentyl and perfluorohexyl. Preferred is perfluoropropyl vinyl ether (PPVE) in which the perfluoroalkyl group is perfluoropropyl.

Examples of the perfluorovinyl ethers further include those of the formula (1) wherein Rf¹ is C₄₋₉-perfluoro(alkoxy alkyl), a group of the formula: 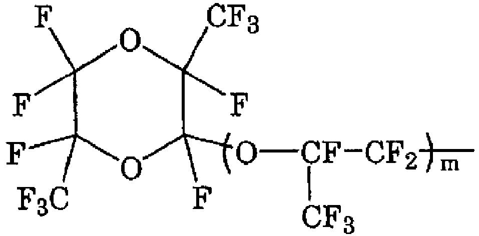 wherein m is 0 or an integer of 1-4, or a group of the formula: 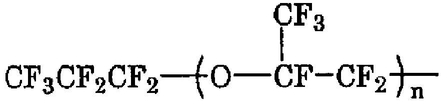 wherein n is an integer of 1-4.

Any perfluoroalkyl ethylenes may be used, and examples thereof include perfluorobutyl ethylene (PFBE) and perfluorohexyl ethylene.

For the fluorine-containing vinyl ethers having a nitryl group, a fluorine-containing vinyl ether represented by CF₂=CFORf²CN (wherein Rf² is C₂₋₇-alkylene wherein an oxygen atom may optionally exist between two carbon atoms) is more preferred.

The modifying monomer in the modified PTFE is preferably at least one of HFP, CTFE, VDF, PPVE, PFBE, and ethylene. It is more preferably at least one of HFP and CTFE.

The modified PTFE preferably contains 0.001-2 mol%, more preferably 0.001-1 mol%, of the modifying monomer unit.

The PTFE has a melt viscosity (MV) of preferably ≥ 1.0 × 10 Pa·s, more preferably ≥ 1.0 × 10² Pa·s, and still more preferably ≥ 1.0 × 10³ Pa·s.

The melt viscosity can be determined in conformity with ASTM D 1238 using a flowtester (Shimadzu Corp.) and a 2φ-8L die as follows: 2 g of a sample is pre-heated at a measurement temperature (380°C) for five minutes, and the sample is maintained at this temperature under a load of 0.7 MPa.

The PTFE preferably has a standard specific gravity (SSG) of 2.130-2.230, more preferably 2.140-2.190.

The standard specific gravity (SSG) can be determined by the immersion method in conformity with ASTM D 4895-89.

The PTFE preferably has a melting point of 324-360°C. The melting point herein is a temperature corresponding to the maximum value on the heat-of-fusion curve drawn at a temperature-increasing rate of 10°C/min using a differential scanning calorimeter (DSC).

The amounts of the respective monomer units constituting the fluororesin in the present description can be determined by any appropriate combination of NMR, FT-IR, elemental analysis, and X-ray fluorescence analysis in accordance with the type of the target monomer.

The yarn constituting the woven fabric of the present fishing net is prepared by processing PTFE into the form of yarn.

The yarn may further contain any additive, if necessary. The additive is not particularly limited, and examples thereof include leveling agents, solid lubricants, pigments, lustering agents, filler, pigment dispersants, surface conditioners, viscosity modifiers, ultraviolet absorbers, light stabilizers, plasticizers, anti-flooding agents, scratch resistance agents, animal repellents, fungicides, antibiotics, anti-corrosion agents, antistatic agents, and silane-coupling agents.

The yarn preferably has an average diameter of 10-2000 µm, more preferably 50-1000 µm.

The average diameter can be determined using a video microscope.

The yarn preferably has a fineness of 70-7000 D. The fineness is more preferably 150-3000 D.

The fineness (D) can be calculated from the measured weight (W) and length (L) by the formula (D) = 9000 × W (g)/L (m).

The woven fabric may further contain fluororesin-free yarn.

The "woven fabric" means an article formed by interlacing the warp and the weft according to a certain rule.

The woven fabric allows more water to pass therethrough than sheets. Thus, it is less likely to be broken when used in water and is more easily collected from the water. Further, the woven fabric is more flexible than sheets, and thus it can be used in more various forms. Furthermore, the woven fabric is stronger than nonwoven fabric, and thus it can be used in applications requiring a higher strength.

For the woven fabric, at least one of the warp and the weft has only to be fluororesin-containing yarn.

The woven fabric can be produced by a method including the steps of producing fluororesin-containing yarn and weaving the resulting yarn into fabric, for example.

Different methods of processing a fluororesin into a yarn-like form are applied to PTFE. A method of twisting PTFE fibers into a yarn-like form may be applied, for example.

The PTFE fibers can be produced by tearing a PTFE film using a shearing device or emulsion spinning, for example.

The emulsion spinning is performed as follows. A small amount of a polymer to be a matrix is added to a PTFE aqueous dispersion, and the polymer-containing dispersion is spun into a coagulation bath. Thereby, fibers are formed in the state that PTFE particles are dispersed in a matrix. These fibers are then heated up to 330-400°C, and thereby the matrix is decomposed and evaporated off. At the same time, the PTFE particles are fused with each other to form PTFE fibers. The PTFE fibers are further stretched at a temperature of 300-400°C, and thereby fibers with improved strength and elongation can be obtained.

The matrix may be formed of a water-soluble polymer such as viscose, sodium alginate, or polyvinyl alcohol.

The method of twisting PTFE fibers may be any known method.

The yarn produced as mentioned above may be woven by any known method. The weaving pattern (textile weave) is not particularly limited, and any known weaving pattern, such as plain, twill, or satin, may be applied.

The woven fabric may be bonded to other fabric. This improves the strength of the fabric. Examples of such other fabric include any fluororesin-free fabric, such as non-fluorine fabric formed from yarn of thermoplastic resin or thermosetting resin. Preferred is fabric formed from yarn of thermoplastic resin, and more preferred is fabric formed from yarn of polyamide resin.

Since the woven fabric comprises yarn containing PTFE, it is excellent in an effect of preventing adhesion of aquatic organisms and in strength, readily sinks in water, and can be used as fishing net.

### EXAMPLES

The present invention will be described below referring to the following non-limiting examples.

### (Melt viscosity)

The melt viscosity was determined in conformity with ASTM D 1238 using a flowtester (Shimadzu Corp.) and 2φ-8L die as follows: 2 g of a sample was pre-heated at a measurement temperature (380°C) for five minutes, and the sample was maintained at this temperature under a load of 0.7 MPa.

### (Standard specific gravity (SSG))

The standard specific gravity (SSG) was determined by the immersion method in conformity with ASTM D 4895-89.

### (Melting point)

The melting point was determined as a temperature corresponding to the maximum value on the heat-of-fusion curve drawn at a temperature-increasing rate of 10°C/min using a differential scanning calorimeter (DSC).

### (Specific gravity)

The specific gravity was determined by the immersion method.

### (Average diameter)

The average diameter was determined using a video microscope.

### (Fineness)

The fineness was calculated as the ratio of the mass to the length of the fiber.

### (MFR)

The MFR was determined in conformity with ASTM D 1238 at a temperature of 372°C and a load of 5 kg.

The amounts of the respective monomer units were determined by any of NMR, FT-IR, elemental analysis, and X-ray fluorescence analysis.

### Example 1

PTFE fabric was formed from yarn (average diameter: 100 µm, fineness: 300 D) of PTFE (SSG: 2.159, melting point: 344°C, specific gravity: 2.159).

The resulting PTFE fabric (test material) was fixed using a test frame made of vinyl chloride. The test material was hung from a quay, and a three-month test for adhesion of aquatic organisms was carried out. The test material was always in seawater. It was pulled up and subjected to a simple analysis after one month and two months from the start of the hanging. The test was finished after three months, and the final observation was performed and the amount of attached aquatic organisms was measured. Table 1 shows the results.

### Comparative Example 1

Nylon fabric was formed from yarn (average diameter: 50 µm, fineness: 35 D) of nylon (specific gravity: 1.13). The resulting nylon fabric was subjected to a three-month test for adhesion of aquatic organisms in the same manner as in Example 1. Table 1 shows the results.

### Comparative Example 2

Polyester fabric was formed from yarn (average diameter: 40 µm, fineness: 50 D) of polyester (specific gravity: 1.31). The resulting polyester fabric was subjected to a three-month test for adhesion of aquatic organisms in the same manner as in Example 1. Table 1 shows the results.

**[Table 1]**

| | Example 1 | Comparative Example 1 | Comparative Example 2 |
|---|---|---|---|
| | PTFE fabric | Nylon fabric | Polyester fabric |
| Dry weight of adhering organisms after 3 months (g) | 0.61 | 1.48 | 1.49 |

### Example 2

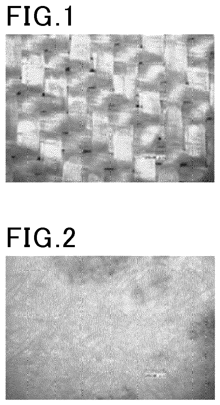

PTFE fabric was formed from yarn (average diameter: 100 µm, fineness: 300 D) of PTFE (SSG: 2.159, melting point: 344°C, specific gravity: 2.159). The resulting PTFE fabric was subjected to a tensile test and measurement of the amount of water permeated. The tensile test was performed in conformity with JIS L1913. For the amount of water permeated, the amount of pure water permeated was measured with a permeation effective cross-sectional area of 13.5 cm² at atmospheric pressure. Table 2 shows the results. Fig. 1 is a picture of the appearance of the PTFE fabric.

### Comparative Example 3

PTFE nonwoven fabric was formed from yarn (average diameter: 100 µm, fineness: 300 D) of PTFE (SSG: 2.159, melting point: 344°C, specific gravity: 2.159). The resulting PTFE nonwoven fabric was subjected to a tensile test and measurement of the amount of water permeated. The tensile test was performed in conformity with JIS L1913. The amount of water permeated was determined in the same manner as in Example 2. Table 2 shows the results. Fig. 2 is a picture of the appearance of the PTFE nonwoven fabric.

### Comparative Example 4

PTFE (SSG: 2.157, melting point: 345°C, specific gravity: 2.157) was compression-molded at 29.4 MPa and sintered for three hours at 370°C in a sintering furnace. Thereby, a 2.0-mm-thick sheet was produced. The resulting PTFE sheet was subjected to a tensile test and measurement of the amount of water permeated. The tensile test was performed in conformity with JIS K6891. The amount of water permeated was determined in the same manner as in Example 2. Table 2 shows the results.

**[Table 2]**

| | Example 2 | Comparative Example 3 | Comparative Example 4 |
|---|---|---|---|
| | PTFE fabric | PFTE nonwoven fabric | PTFE sheet |
| Tensile strength (MPa) | 38 | 4 | 57 |
| Tensile elongation (%) | 7 | 21 | 450 |
| Amount of water permeated (g/20 sec) | 12 | 16 | 0 |

### Reference Example 1

PTFE (SSG: 2.157, melting point: 345°C, specific gravity: 2.157) was compression-molded at 29.4 MPa and sintered for three hours at 370°C in a sintering furnace. Thereby, a 2.0-mm-thick sheet was produced. The resulting PTFE sheet was subjected to a test for adhesion of Balanomorpha. Table 3 shows the results.

### Reference Example 2

A FEP sheet was produced in the same manner as in Reference Example 1 except that the PTFE was replaced by a tetrafluoroethylene/hexafluoropropylene copolymer (FEP) (TFE/HFP = 93/7 (ratio by mole), melting point: 268°C, specific gravity: 2.12). The resulting FEP sheet was subjected to a test for adhesion of Balanomorpha. Table 3 shows the results.

### (Test for adhesion of Balanomorpha)

Each of the sheets was hung in a seawater-circulating tank together with a mesh-type test container. Then, larvae in the adhesion period of Balanomorpha were introduced into the test container and the state of adhesion thereof to the sheet was observed. Thereby, for the respective sheets, the effect of preventing adhesion in the stream of water was evaluated.

The number (n) of larvae in the adhesion period of Balanomorpha which were attached to the sheet among those introduced into the test container was counted, and the adhesion rate to the sheet in the stream of water was calculated by the following formula: (n/(number of larvae in the adhesion period of Balanomorpha introduced)) × 100%.

**[Table 3]**

| | | Reference Example 1 | Reference Example 2 |
|---|---|---|---|
| Resin | | PTFE | FEP |
| Shape | | Sheet | Sheet |
| Test for Balanomorpha adhesion | Initial adhesion rate (%) | 11.2 | 59.4 |
| | Adhesion rate 1 week after dropping test (%) | 11.2 | 59.4 |
| | Adhesion rate 2 weeks after dropping test (%) | 11.2 | 58.5 |

## Claims

1. A fishing net comprising a woven fabric for preventing adhesion of aquatic organisms comprising yarn obtained by processing a fluororesin into the form of yarn, wherein the fluororesin is polytetrafluoroethylene (PTFE).

## Patentansprüche

1. Fischernetz, umfassend ein Gewebe zur Verhinderung des Anhaftens von Wasserorganismen, das Garn umfasst, das durch Verarbeiten eines Fluorharzes in die Form von Garn erhalten ist, worin das Fluorharz Polytetrafluorethylen (PTFE) ist.

## Revendications

1. Filet de pêche comprenant un tissu tissé destiné à empêcher l'adhérence d'organismes aquatiques comprenant un fil obtenu en transformant une résine fluorée sous la forme d'un fil, dans lequel la résine fluorée est du polytétrafluoroéthylène (PTFE).
